# EUROPEAN PATENT APPLICATION

(11) **EP 1 185 118 A1**
(43) Date of publication of application: **06.03.2002**
(21) Application number: 01302214.0
(22) Date of filing: 12.03.2001
(51) Int. Cl.: H04Q 7/22, H04M 15/28

(54) **Method for obtaining roaming charge information for a mobile unit**

(30) Priority: 31.08.2000 US 652399
(71) Applicant: LUCENT TECHNOLOGIES INC., Murray Hill, New Jersey 07974-0636 (US)
(72) Inventor: Lopez, Ismael, Berwyn, Illinois 60402 (US); Brockman, Richard James, Naperville, Illinois 60540 (US); Sands, Phillip Michael, Champaign. Illinois 61820 (US)
(74) Representative: Watts, Christopher Malcolm Kelway, Dr.

(57) **Abstract**

The present invention relates to a method for obtaining roaming charges information for and providing roaming charges information to a mobile unit (102). Roaming charge information is stored in a database (151,153). The roaming charge information (305) can be sent to the mobile unit (102) based upon user input at the mobile unit (102), such as by entering a predefined key sequence, or can be sent to the mobile unit (102) automatically upon the mobile unit (102) roaming into the service area of a wireless system (103) other than the home wireless system (103) of the mobile unit (102).

## Description

### Field of the Invention

The present invention relates generally to communication systems, and more particularly to a method for obtaining roaming charge information for a mobile unit.

### Background of the Invention

Mobile phone users typically register for service with a cellular service provider. The cellular service provider provides service to the mobile phone to allow the mobile phone to perform predefined functions, such as placing and receiving telephone calls. Cellular service providers charge the user of the mobile phone for the service, typically by the minute or through the use of a monthly fee for a predetermined number of airtime minutes.

Cellular service providers provide service within predefined coverage areas. The coverage areas are geographic locations that are serviced by base stations provided by the cellular service provider. Although cellular service providers continue to provide increasing coverage areas, there are occasions when a user of a mobile phone desires to use the mobile phone in a location that is not covered by base stations provided by the cellular service provider. Most mobile phones can receive service from different service providers when outside the coverage area of their own service provider.

Roaming refers to a mobile phone that is attempting to get service in an area that is not covered by the mobile phone's service provider. Service providers typically provide service to mobile phones that roam into their coverage area. This service is provided for a fee, which is typically the normal per minute rate for a call, plus additional fees. These additional fees can include a registration fee, a fee for each call made or received by the roaming mobile phone, or an increased per minute charge to the mobile unit.

Roaming charges can be significant. Without knowledge of the roaming charges charged by a visited cellular system, a user may not make a call while outside of the service area of his or her cellular service provider due to the unexpected and often high cost of roaming. In addition, roaming charges can be difficult to discover while at home, and even more difficult to determine while roaming.

Therefore, a need exists for a method for obtaining roaming charge information for a mobile phone, particularly while the mobile phone is roaming.

### Summary of the Invention

It is an object of the present invention to provide a method for obtaining roaming charge information for a mobile unit while the mobile unit is roaming in the wireless system of another service provider. The mobile unit registers with a first, visited wireless system. In the preferred embodiment, the mobile unit, such as a cellular phone, sends a request for roaming charge information for a second wireless system. The mobile unit preferably sends the request by entering a special code in the mobile unit.

Roaming charge information for the mobile unit while accessing the second wireless system is obtained. The roaming charge information is retrieved from a roaming charges database. The roaming charges database can be coupled to a Public Switched Telephone Network (PSTN), to the home wireless system, or to the visited wireless system. The roaming charge information is sent to the mobile unit.

In the alternate embodiment of the present invention, roaming charge information for a mobile unit is automatically obtained when the mobile unit roams to a visited wireless system. The mobile unit registers for cellular service at a home wireless system. When the mobile unit roams to a visited wireless system, it registers with the visited wireless system. The visited wireless system then automatically sends roaming charge information to the mobile unit. This information can be sent as a text message to be displayed on the mobile unit, as data, or as speech for the mobile unit.

### Brief Description of the Drawings

FIG. 1 depicts a communication system in accordance with the preferred embodiment of the present invention.

FIG. 2 depicts a flowchart of a method for obtaining roaming charge information in accordance with the preferred embodiment of the present invention.

FIG. 3 depicts a user record utilized in obtaining roaming charge information in accordance with the preferred embodiment of the present invention.

FIG. 4 depicts a flowchart of a method for obtaining roaming charge information in accordance with an alternate embodiment of the present invention.

FIG. 5 depicts a flowchart of a method for obtaining roaming charge information in accordance with a further alternate embodiment of the present invention.

### Description of the Preferred Embodiment(s)

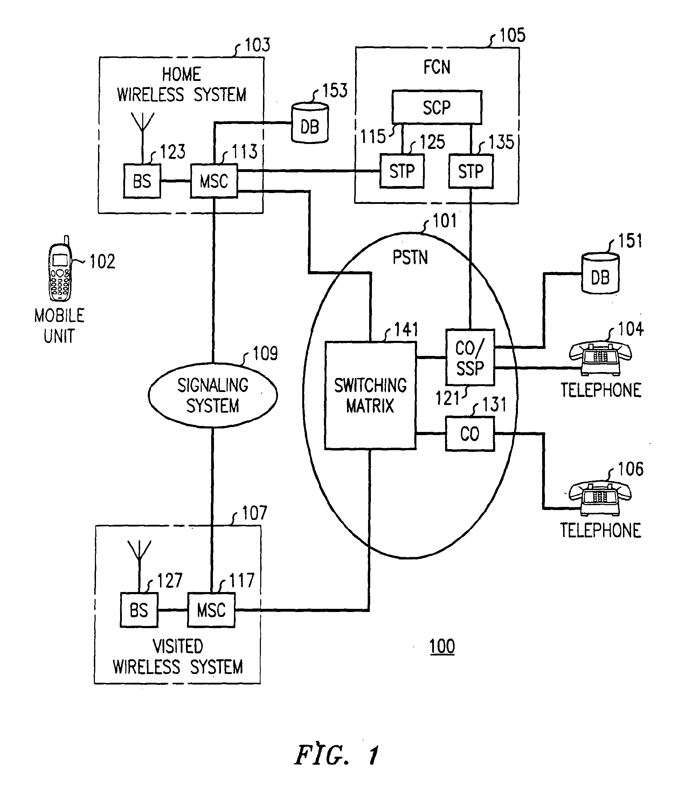

FIG. 1 depicts a communication system 100 in accordance with the preferred embodiment of the present invention. Communication system 100 includes Public Switched Telephone Network (PSTN) 101, home wireless system 103, Feature Control Network (FCN) 105, visited wireless system 107, and signaling system 109. Mobile unit 102, telephone 104, and telephone 106 are depicted and are in communication with communication system 100.

Mobile unit 102 is a wireless device, preferably a cellular phone. Mobile unit 102 can alternately be a pager, a wireless internet access device, or any other wireless device that communicates over Radio Frequencies (RF) with home wireless system 103.

PSTN 101 includes a Central Office/Service Switching Point (CO/SSP) 121, Central Office (CO) 131, and switching/transmission matrix 141 which includes other switches and interconnections associated with PSTN 101.

Home wireless system 103 is preferably a cellular system that provides service within a predefined geographic region. Home wireless system 103 includes Mobile Switching Center (MSC) 113 and at least one Base Station (BS) 123.

Feature Control Network (FCN) 105 is preferably a conventional Intelligent Network (IN) which includes a Service Control Point (SCP) 115 and Signal Transfer Points (STPs) 125 and 135. Alternately, FCN 105 can be an adjunct processor and database. FCN 105 can alternately be located within signaling system 109.

Visited wireless system 107 is preferably a cellular system that provides service and coverage within a second coverage area. The second coverage area is a predefined geographic region that is at least partially distinct from that of the home wireless system 103. Visited wireless system 107 includes Mobile Switching Center (MSC) 117 and at least one Base Station (BS) 127.

Signaling system 109 is disposed between home wireless system 103 and visited wireless system 107 and provides for control signals to be sent between the systems.

Communication system 100 also includes at least one roaming charges databases. The roaming charges database(s) include service charge information for each mobile unit. The service charge information is based on the service agreement between the subscriber, mobile unit 102, and the service provider. The service charge information is also based on the roaming agreements between home wireless system 103, visited wireless system 107, and any other wireless systems.

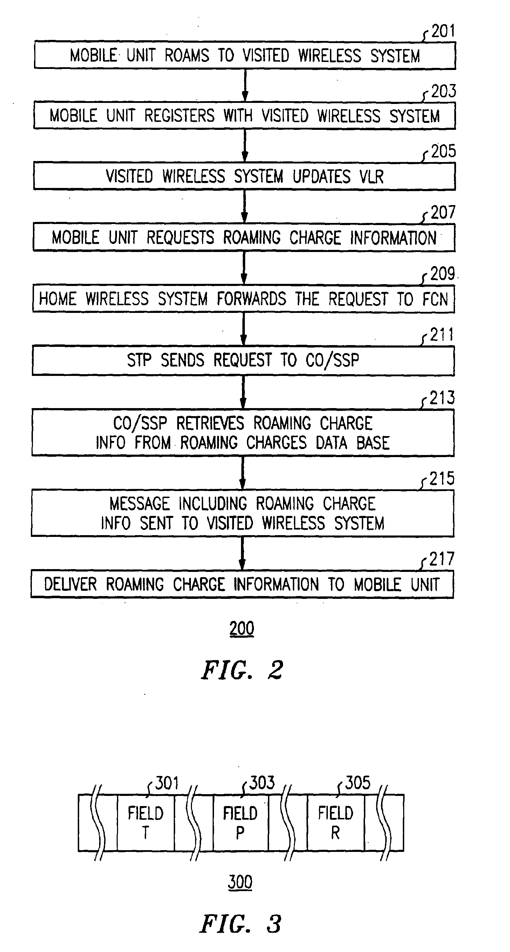

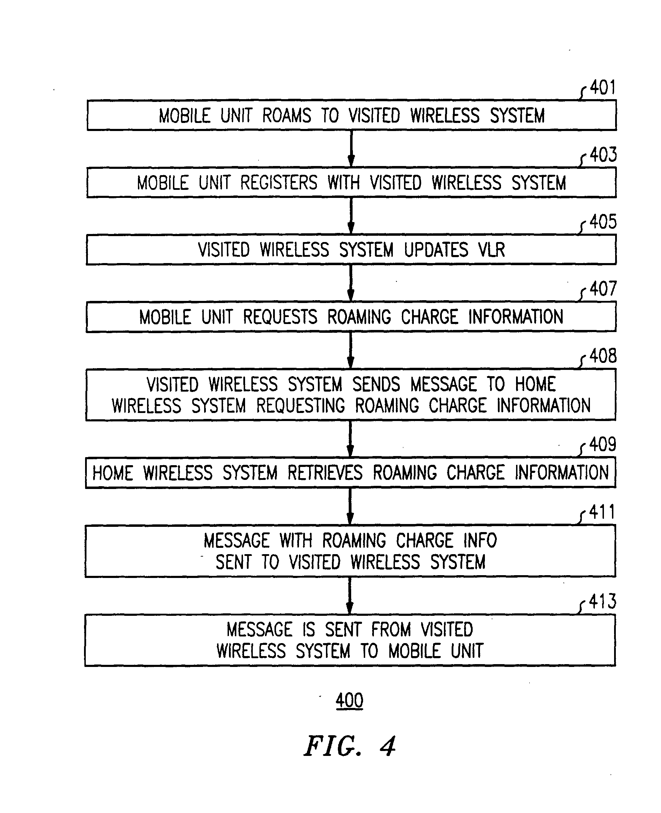

Roaming charges database 151 is preferably coupled to CO/SSP 121 located in PSTN 101. Alternately, roaming charges database 153 is coupled to MSC 113 located in home wireless system 103. Communication system 100 can include both roaming charge database 151 and roaming charge database 153. FIG. 2 depicts the preferred embodiment, where the roaming charge information for mobile unit 102 is obtained from roaming charges database 151, which is coupled with PSTN 101. FIG. 4 depicts the alternate embodiment, where the roaming charge information for mobile unit 102 is obtained from roaming charge database 153, which is coupled to home wireless system 103.

FIG. 2 depicts a flowchart 200 of a method for obtaining roaming charge information in accordance with the preferred embodiment of the present invention. In the preferred embodiment of the present invention, roaming charges database 151 is coupled to PSTN 101 as a service to wireless service providers. In this embodiment, when mobile unit 102 requests roaming charges for visited wireless system 107, a query is sent to roaming charges database 151, which is coupled to CO/SSP 121 located at PSTN 101.

In the preferred embodiment, mobile unit 102 roams (201) to a coverage area that is within visited wireless system 107 but not within the coverage area provided by home wireless system 103. Although this description describes the case where mobile unit 102 requests roaming charge information upon roaming into the coverage area that is within visited wireless system 107, the roaming charge information can be obtained when mobile unit 102 is located outside the area serviced by visited wireless system 107. For example, the user of mobile unit 102 can request the roaming charges prior to embarking on a trip that will take the user to the area covered by visited wireless system 107. This prior request can be made by mobile unit 102, or by another phone, such as telephone 104 or telephone 106, or via the Internet.

Mobile unit 102, upon roaming into the service area covered by visited wireless system 107, registers (203) with visited wireless system 107. MSC 117 requests information pertaining to mobile unit 102 from the home wireless system of mobile unit 102, in this case home wireless system 103. The request from MSC 117 is made via signaling system 109. Home wireless system 103 provides information to visited wireless system 107.

Visited wireless system 107 updates (205) the Visitors Location Record (VLR) at visited wireless system 107 with the necessary information about the roaming mobile unit 102. The VLR is a database that includes information pertaining to users within Visited Wireless System 107 who are not regular subscribers to visited wireless system 107. The VLR record for mobile unit 102 preferably includes information about whether or not mobile unit 102 is allowed to request roaming charge information. Alternately, the feature indicators are stored at the HLR. In this embodiment, the special number, or Service Code, is sent from the VLR to the HLR. The HLR provides the information to the VLR if the feature is active at the HLR. Thus, when the mobile dials the special number, the VLR sends the dialed digits to the HLR. The HLR processes the digits and determines that roaming information is being requested. The HLR can have the feature active per subscriber or per MSC. The HLR then requests the roaming charges from the roaming charges database and forwards the information to the serving MSC at the visited wireless system. The serving MSC then forwards the information to the mobile unit.

After registering with visited wireless system 107, mobile unit 102 requests (207) roaming charge information. This can be accomplished by entering a special star "*" code followed by entering a special number. When the request is made, visiting wireless system 107 sends a message to home wireless system 103 through signaling system 109 to request this information.

Home wireless system 103 then forwards (209) the request to FCN 105. STP 125 passes the request to SCP 115, which in turn distributes the request to the appropriate STP, in this case STP 135. STP 135 then sends (211) the request to CO/SSP 121, located within PSTN 101. CO/SSP 121 retrieves (213) the roaming charge information from roaming charges database 151. The roaming charge information relates to mobile unit 102 while it is located within the area covered by visited wireless system 107.

Once the roaming charge information is obtained from roaming charges database 151, a message is sent (215) back to visited wireless system 107 through communication system 100 in the reverse of the order in which it was received. This message is then sent (217) to mobile unit 102 and includes the roaming charge information. The message can be a text message, a data message, or a speech message.

FIG. 4 depicts a flowchart 400 of a method for obtaining roaming charge information in accordance with the alternate embodiment of the present invention. In the alternate embodiment of the present invention, roaming charges database 153 is coupled to MSC 113 located within home wireless system 103.

In this embodiment, when mobile unit 102 roams to visited wireless system 107 and requests roaming charges for that system, a query is sent to home wireless system 103 which looks up the roaming charges in roaming charges database 153 that would be applied to calls made by mobile unit 102 while within the coverage area of visited wireless system 107.

In this embodiment, when mobile unit 102 requests roaming charges for visited wireless system 107, a query is sent to roaming charges database 153, which is coupled to MSC 113 located within home wireless system 103.

Mobile unit 102 roams (401) to a coverage area that is within visited wireless system 107 but not within the coverage area provided by home wireless system 103. Although this description describes the case where mobile unit 102 requests roaming charge information upon roaming into the coverage area that is within visited wireless system 107, the roaming charge information can be obtained when mobile unit 102 is located outside the area serviced by visited wireless system 107. For example, the user of mobile unit 102 can request the roaming charges prior to embarking on a trip that will take the user to the area covered by visited wireless system 107. This prior request can be made by mobile unit 102, by another phone, such as telephone 104 or telephone 106, or accessed over the Internet.

Mobile unit 102, upon roaming into the service area covered by visited wireless system 107, registers (403) with visited wireless system 107. MSC 117 requests information pertaining to mobile unit 102 from the home wireless system of wireless device 102, in this case home wireless system 103. The request from MSC 117 is made via signaling system 109. Home wireless system 103 provides information to visited wireless system 107. Visited wireless system 107 updates (405) the Visitors Location Record (VLR) at visited wireless system 107 with the necessary information about the roaming mobile unit 102. The VLR for mobile unit 102 preferably includes information about whether or not mobile unit 102 is allowed to request roaming charge information.

After registering with visited wireless system 107, mobile unit 102 requests (407) roaming charge information. This can be accomplished by entering a special star "*" code or entering a special number. When the request is made, visiting wireless system 107 sends (408) a message to home wireless system 103 through the signaling system 109 to request this information.

Home wireless system 103 then retrieves (409) the roaming charge information from roaming charges database 153 for mobile unit 102 while in communication with visited wireless system 107.

Once the roaming charge information is obtained from roaming charges database 153, a message is sent (411) back to visited wireless system 107 through signaling system 109. Visited wireless system 107 then sends (413) the message including the roaming charge information to mobile unit 102 over the air interface. The message includes the roaming charge information and can be a text message, a data message, or a speech message utilizing text to speech conversion.

FIG. 3 depicts a user record 300 utilized in obtaining roaming charge information in accordance with the preferred embodiment of the present invention. User record 300 preferably includes a plurality of data entry fields, although only three are depicted for clarity.

Field T 301 includes the phone number of mobile unit 102. Field P 303 includes the type of information permitted for mobile phone 102 to receive. For example, Field P 303 can include the permission level for mobile unit 102. For example, Field P 303 can be a field that includes whether the user has permission to access roaming charge information.

Field R 305 includes the roaming charge information, and can include the one-time roaming charge, the per-minute roaming charge, and other roaming fees that would be charged to the user of mobile unit 102 when mobile unit 102 roams to visited wireless system 107.

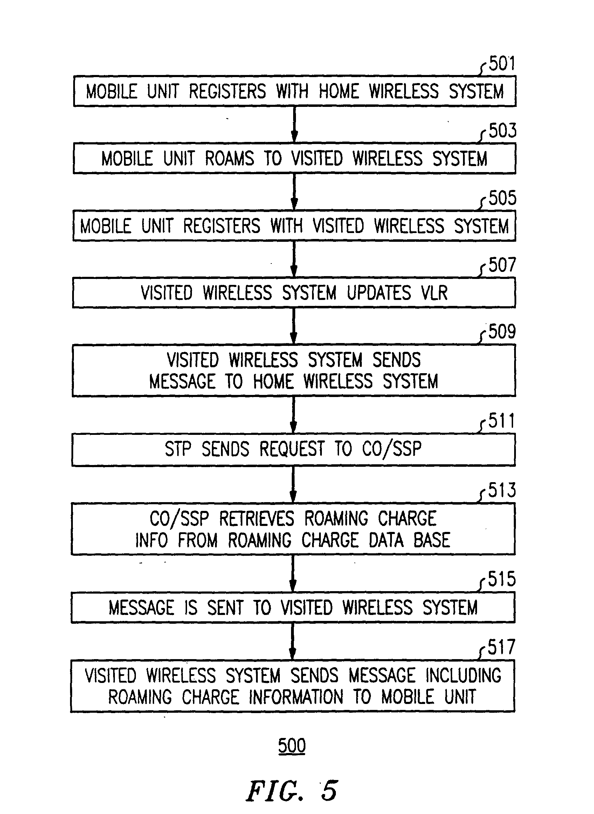

FIG. 5 depicts a flowchart 500 of a method for obtaining roaming charge information in accordance with a further alternate embodiment of the present invention. In this embodiment, the roaming charge information is sent to the mobile unit automatically upon entering the coverage area of a visited wireless system.

A mobile unit registers (501) with a home wireless system. The registration typically occurs upon purchasing the mobile unit, but can alternately occur when the owner of a mobile unit desires to switch service providers. Part of the registration process typically includes choosing the service package that applies to the mobile unit. The service package often includes various methods of providing service, including roaming service. The availability and charges related to roaming service can therefore be different for different users.

The mobile unit may then roams (503) to a visited wireless system. The visited wireless system is distinct from the home wireless system and has a coverage area that is, at least in some areas, distinct from that of the home wireless system.

The mobile unit, upon roaming into the service area covered by the visited wireless system, registers (505) with the visited wireless system. MSC 107 requests information pertaining to mobile unit 102 from home wireless system 103 of mobile unit 102. An automatic request for roaming charge information is made from MSC 107 via signaling system 109. Home wireless system 103 provides information to visited wireless system 107, which updates (507) the Visitors Location Record (VLR) at visited wireless system 107 with the necessary information about the roaming mobile unit 102. The VLR record for roaming mobile unit 102 preferably includes information about whether or not mobile unit 102 is allowed to request roaming charge information.

Visiting wireless system 107 then automatically sends (509) a message to home wireless system 103 through signaling system 109 to request roaming charge information for mobile unit 102. STP 125 within FCN 105 passes the message to SCP 115 within FCN 105, which in turn distributes the request to STP 135. STP 135 then sends (511) the request to CO/SSP 121 located within PSTN 101. CO/SSP 121 then retrieves (513) the roaming charge information from roaming charge database 151. The roaming charge information relates to mobile unit 102 while mobile unit 102 is located within the area covered by visited wireless system 107.

Once the roaming charge information is obtained from roaming charges database 151, a message is sent (515) back to the visited wireless system through the communication system in the reverse of the order in which it was received.

Visited wireless system 107 then sends (517) a message including the roaming charge information to mobile unit 102. The message can be a text message, a data message, a speech message, or any form of information that conveys the roaming charge information to mobile unit 102.

In this embodiment of the present invention, the sending of the message including the roaming charge information for the mobile unit while within the visited wireless system occurs automatically upon the mobile unit roaming into the visited wireless system, and occurs without user input from the mobile unit.

Thus, the present invention provides a method and communication system that solves a problem associated with the prior art. The present invention provides a method for obtaining roaming charge information for a mobile unit while the mobile unit is within the visited wireless system or prior to roaming. The roaming charge information is preferably obtained by the mobile unit while roaming, but can alternately be accessed by a telephone or other mobile units. The roaming charge information can be obtained while the mobile unit is within the coverage area of their home wireless system, e.g. not roaming, or within the coverage area of a different wireless system, e.g. while roaming.

In an alternate embodiment of the present invention, the visited wireless system sends roaming charge information automatically to a mobile unit that roams into its coverage area. In this manner, a mobile unit automatically receives the roaming charge information upon entering a new wireless system, and without having to manually perform any functions. Consequently, the user of the roaming mobile unit is able to have immediate access to roaming charge information without user input.

While this invention has been described in terms of certain examples thereof, it is not intended that it be limited to the above description, but rather only to the extent set forth in the claims that follow.

## Claims

1. A method for obtaining roaming charges information for a mobile unit that is registered with a home wireless system, the method comprising the steps of:
sending a request for roaming charge information from the mobile unit for a visited wireless system while the mobile unit is within the visited wireless system, the visited wireless system being different than the home wireless system;
obtaining roaming charge information for the mobile unit while accessing the visited wireless system; and
sending the roaming charge information to the mobile unit while the mobile unit is within the visited wireless system.

2. A method for obtaining roaming charges information in accordance with claim 1, wherein the step of requesting roaming charge information comprises entering a special code in the mobile unit.

3. A method for obtaining roaming charges information in accordance with claim 2, wherein a connection is established after entering the special code in the mobile unit, the method further comprising the step of sending the roaming charge information to the mobile unit during the connection.

4. A method for obtaining roaming charges information in accordance with claim 2, wherein a first connection is established after entering the special code in the mobile unit, the method further comprising the step of sending the roaming charge information to the mobile unit during a second connection that occurs after the first connection has terminated.

5. A method for obtaining roaming charges information in accordance with claim 2, the method further comprising the step of sending a text message including the roaming charge information to the mobile unit in response to the mobile unit entering the special code.

6. A method for obtaining roaming charges information in accordance with claim 1, wherein the step of obtaining roaming charges comprises accessing a roaming charges database.

7. A method for obtaining roaming charges information in accordance with claim 6, wherein the roaming charges database is coupled to a Public Switched Telephone Network (PSTN).

8. A method for obtaining roaming charges information in accordance with claim 6, wherein the roaming charges database is coupled to the home wireless system.

9. A method for obtaining roaming charges information in accordance with claim 1, wherein the step of sending the roaming charge information to the mobile unit comprises sending a text message including the roaming charge information to the mobile unit.

10. A method for obtaining roaming charges information in accordance with claim 9, wherein the text message is sent utilizing the Short Messaging System.

11. A method for automatically obtaining roaming charges information for a mobile unit that is registered with a home wireless system, the method comprising the steps of:
registering the mobile unit for cellular service at the home wireless system;
roaming by the mobile unit to a visited wireless system, the visited wireless system being different than the home wireless system; and
automatically sending roaming charge information from the visited wireless system to the mobile unit upon roaming into the visited wireless system.

12. A method for automatically obtaining roaming charges information for a mobile unit in accordance with claim 11, wherein the step of automatically sending roaming charge information to the mobile unit comprises sending a text message to the mobile unit, the text message including the roaming charge information.

13. A method for automatically obtaining roaming charges information for a mobile unit in accordance with claim 11, wherein the step of automatically sending roaming charge information to the mobile unit comprises sending a data message to the mobile unit, the data message including the roaming charge information.

14. A method for automatically obtaining roaming charges information for a mobile unit in accordance with claim 13, wherein the data message is a Short Messaging Service (SMS) message.

15. A method for automatically obtaining roaming charges information for a mobile unit in accordance with claim 11, wherein the step of automatically sending roaming charge information to the mobile unit comprises sending a speech message to the mobile unit, the speech message including the roaming charge information.

16. A method for automatically obtaining roaming charges information for a mobile unit in accordance with claim 15, wherein the speech message is generated by converting text to speech.

17. A method for automatically obtaining roaming charges information for a mobile unit in accordance with claim 11, the method further comprising the step of sending roaming charge information to a voice mail account associated with the mobile unit.

18. A method for automatically obtaining roaming charges information for a mobile unit in accordance with claim 11, the method further comprising the step of calling back the mobile unit with the roaming charge information.

19. A communication system for effectuating the obtaining of roaming charge information automatically, the communication system comprising:
a home wireless system that provides coverage in a first service area;
a visited wireless system that provides coverage in a second service area different than the first service area;
a Public Switched Telephone Network (PSTN) coupled to the home wireless system and the visited wireless system;
a roaming charges database that is accessible from the home wireless system and the visited wireless system, the roaming charges database providing information relating to the roaming charges for a mobile unit that roams from the home wireless system to the visited wireless system; and
a mobile unit that subscribes to the home wireless system, the mobile unit automatically receiving roaming charge information from the visited wireless system upon roaming into the coverage area of the visited wireless system.

20. A communication system for effectuating the obtaining of roaming charge information in accordance with claim 19, wherein the roaming charges database is directly coupled to the PSTN.

21. A communication system for effectuating the obtaining of roaming charge information in accordance with claim 19, wherein the roaming charges database is directly coupled to the home wireless system.

22. A communication system for effectuating the obtaining of roaming charge information in accordance with claim 19, wherein the visited wireless system automatically sends the roaming charge information to the mobile unit when the mobile unit roams into the second service area.
